# EUROPEAN PATENT SPECIFICATION

(11) **EP 4 572 227 B1**
(45) Date of publication and mention of the grant of the patent: **06.05.2026**
(21) Application number: 23856268.0
(22) Date of filing: 28.06.2023
(51) Int. Cl.: H04L 9/32, H04W 12/122, H04W 12/04, H04W 12/06, H04W 12/03, H04W 12/40, H04L 9/08, H04W 12/08, H04W 12/108

(54) **METHOD FOR VERIFYING ACCESS REQUEST, USER TERMINAL, AND BASE STATION**
VERFAHREN ZUR ÜBERPRÜFUNG EINER ZUGRIFFSANFORDERUNG, BENUTZERENDGERÄT UND BASISSTATION
PROCÉDÉ DE VÉRIFICATION DE DEMANDE D'ACCÈS, TERMINAL UTILISATEUR ET STATION DE BASE

(30) Priority: 22.08.2022 CN 202211007141
(43) Date of publication of application: 18.06.2025
(73) Proprietor: ZTE CORPORATION, Shenzhen, Guangdong 518057 (CN)
(72) Inventor: JI, Hongwei, Shenzhen, Guangdong 518057 (CN); YAN, Xincheng, Shenzhen, Guangdong 518057 (CN); ZHOU, Na, Shenzhen, Guangdong 518057 (CN); JIANG, Zhihong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/103221
(87) International publication number: WO 2024/041177

(56) References cited:
- WO-A1-2007/140665
- CN-A- 111 083 131
- CN-A- 111 083 131
- CN-A- 111 107 550
- CN-A- 114 154 135
- JP-A- 2018 148 463
- US-A1- 2021 135 878
- SAN C VO: "A Survey of Elliptic Curve Cryptosystems, Part I: Introductory", NAS TECHNICAL REPORT - NAS-03-012, 27 October 2003 (2003-10-27), XP055422565, Retrieved from the Internet <URL:https://www.nas.nasa.gov/assets/pdf/techreports/2003/nas-03-012.pdf> [retrieved on 20171108]

## Description

### TECHNICAL FIELD

The present application relates to the field of network security, and particularly, to a method and a user terminal for verifying an access request, and a base station.

### BACKGROUND

In the field of communication, when a Radio Resource Control (RRC) connection is initially established between a user terminal and a communication base station, an RRCConnectionRequest message may be used by the user terminal to apply for channel resources from the communication base station.

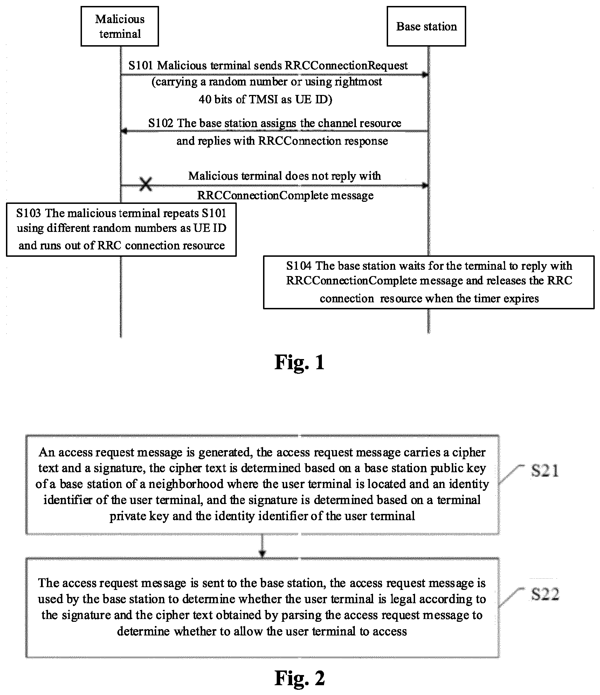

Fig. 1 is a schematic view of an interaction between a user terminal and a communication base station. Since the communication base station cannot confirm an identity of the user terminal, under a condition that an attacker modifies a source code and frequently uses different random numbers as an identity identifier user equipment identity document (UE ID) of a malicious terminal to send the RRCConnectionRequest message to the base station, the malicious terminal will not reply wtih an RRCConnectionComple message after the base station assigns the channel resources and replies with the RRCConnection message. Under this condition, it is only not until the timer expires that the base station can release the channel resources. In case that a large number of malicious terminals initiate attacks on the base station, RRC connection resources of the communication base station are often far greater than the released resources, thereby causing an air interface Denial of Service (DoS) attack.

How to improve verification validity of a network access request to prevent the DoS attack is a technical problem to be solved in the present application.

CN111083131A discloses a method for lightweight identity authentication of a power Internet of things sensing terminal, which comprises the following steps that firstly, an Internet of things terminal sends ciphertext data and a signature value to an edge Internet of things agent and enters a second step; step two, the edge Internet of things agent unlocks the ciphertext data and verifies the signature value, and the step three is entered; step three, judging whether the ciphertext data decrypted by the edge Internet of things agent is correct or not, and judging whether the signature value verified by the edge Internet of things agent is correct or not: if the conditions that the ciphertext data decrypted by the edge internet of things agent is correct and the signature value verified by the edge internet of things agent is correct are met, entering a fourth step; and if the ciphertext data decrypted by the edge Internet of things agent is incorrect or the signature value verified by the edge Internet of things agent is incorrect, the edge Internet of things agent sends an alarm to the terminal and enters the step five, the alarm frequency N is defined, N is an integer, N = N + L, and L is a constant which is not 0. US2021135878A1 discloses a embodiment mutual authentication and security agreement (MASA) protocols may use independently generated integrity and/or encryption keys to securely communicate private information exchanged between UEs and various network side devices (e.g., base stations, MMEs, HSSs, etc.). In particular, embodiment MASA protocols may use an initial authentication request (IAR) encryption key to encrypt UE specific information (e.g., an IMSI, etc.) in an IAR message and/or an initial authentication response (IAS) encryption key to encrypt private information in an IAS message. Additionally, embodiment MASA protocols may use an IAR integrity protection key to verify the integrity of information in an IAR message and/or an IAS integrity protection key to verify the integrity of information in an IAS message.

### SUMMARY

An object of embodiments of the present application is to provide a method and a user terminal for verifying an access request, and a base station. However, the claimed subject-matter is defined by the claims.

It is further disclosed, a method, applied to a user terminal, for verifying an access request is provided, the method includes: generating an access request message, in which the access request message carries a cipher text and a signature, the cipher text is determined based on a base station public key of a base station covering the cell where the user terminal is located and an identity identifier of the user terminal, and the signature is determined based on a terminal private key and the identity identifier of the user terminal; and sending the access request message to the base station, in which the access request message is for the base station to determine whether the user terminal is legal based on the signature and the cipher text obtained by parsing the access request message to determine whether to allow the user terminal to access.

It is further disclosed, a method, applied to a base station, for verifying an access request is provided, the method includes: receiving an access request message of a user terminal, in which the access request message carries a cipher text and a signature, the cipher text is determined based on a base station public key of a base station and an identity identifier of the user terminal, and the signature is determined based on a terminal private key and the identity identifier of the user terminal; parsing the access request message based on a base station private key and a terminal public key of the user terminal to obtain the signature and the cipher text; and determining legality of the user terminal according to the signature and the cipher text obtained by parsing to determine whether to allow the user terminal to access.

It is further disclosed, a user terminal is provided, and the user terminal includes: a generation module configured to generate an access request message, in which the access request message carries a cipher text and a signature, the cipher text is determined based on a base station public key of a base station covering the cell where the user terminal is located and an identity identifier of the user terminal, and the signature is determined based on a terminal private key and the identity identifier of the user terminal; and a sending module configured to send the access request message to the base station, in which the access request message is for the base station to determine whether the user terminal is legal based on the signature and the cipher text obtained by parsing the access request message to determine whether to allow the user terminal to access.

It is further disclosed, a base station is provided, and the base station includes: a receiving module configured to receive an access request message of a user terminal, in which the access request message carries a cipher text and a signature, the cipher text is determined based on a base station public key of the base station and an identity identifier of the user terminal, and the signature is determined based on a terminal private key and the identity identifier of the user terminal; a parsing module configured to parse the access request message based on a base station private key and a terminal public key of the user terminal to obtain the signature and the cipher text; and a determination module configured to determine legality of the user terminal according to the signature and the cipher text obtained by parsing to determine whether to allow the user terminal to access.

It is further disclosed, an electronic device is provided, and the electronic device includes a processor, a memory and a computer program stored on the memory and executable by the processor, and the computer program, when executed by the processor, implements steps of the method of the first aspect or the second aspect.

It is further disclosed, a computer readable storage medium storing a computer program thereon is provided, the computer program, when executed by a processor, implements steps of the method of the first aspect or the second aspect.

### BRIEF DESCRIPTION OF THE DRAWINGS

Accompanying drawings described herein are used for a further understanding of the present application and constitute a part of the present application. Illustrative embodiments of the present application and illustration thereof are used for explaining the present application and do not improperly limit the present application. In the accompanying drawings:
Fig. 1 is a schematic view of an interaction between a user terminal and a communication base station;
Fig. 2 is one of schematic flowcharts of a method for verifying an access request on a user terminal side according to an embodiment of the present application;
Fig. 3 is one of schematic flowcharts of a method for verifying an access request on a base station side according to an embodiment of the present application;
Fig. 4A is one of schematic views of an interaction between a base station and a user terminal according to an embodiment of the present application;
Fig. 4B is a schematic structural view of a base station and a user terminal according to an embodiment of the present application;
Fig. 5 is a second one of schematic flowcharts of a method for verifying an access request on a user terminal side according to an embodiment of the present application;
Fig. 6 is a second one of schematic views of an interaction between a base station and a user terminal according to an embodiment of the present application;
Fig. 7 is a second one of schematic flowcharts of a method for verifying an access request on a base station side according to an embodiment of the present application;
Fig. 8 is a third one of schematic flowcharts of a method for verifying an access request on a user terminal side according to an embodiment of the present application;
Fig. 9 is a third one of schematic flowcharts of a method for verifying an access request on a base station side according to an embodiment of the present application;
Fig. 10 is a fourth one of schematic flowcharts of a method for verifying an access request on a base station side according to an embodiment of the present application;
Fig. 11 is a fifth one of schematic flowcharts of a method for verifying an access request on a base station side according to an embodiment of the present application;
Fig. 12 is a third one of schematic views of an interaction between a base station and a user terminal according to an embodiment of the present application;
Fig. 13 is a fourth one of schematic flowcharts of a method for verifying an access request on a user terminal side according to an embodiment of the present application;
Fig. 14 is a fifth one of schematic flowcharts of a method for verifying an access request on a user terminal side according to an embodiment of the present application;
Fig. 15 is a sixth one of schematic flowcharts of a method for verifying an access request on a base station side according to an embodiment of the present application;
Fig. 16 is a seventh one of schematic flowcharts of a method for verifying an access request on a base station side according to an embodiment of the present application;
Fig. 17 is a fourth one of schematic views of an interaction between a base station and a user terminal according to an embodiment of the present application;
Fig. 18 is a schematic structural view of a user terminal according to an embodiment of the present application; and
Fig. 19 is a schematic structural view of a base station according to an embodiment of the present application.

### DETAILED DESCRIPTION

Technical solutions of embodiments of the present application will be described clearly and completely in conjunction with drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application. Reference numbers in the present application are only used for distinguishing various steps in a scheme, and are not used for limiting execution order of the various steps, and specific execution order is described in the description.

In 5th generation mobile communication technology (5G), a terminal may use a subscription permanent identifier (SUPI) to indicate an identity of a terminal user, and under a condition that the SUPI is transmitted directly in a network, there is a security risk. In order to prevent user's privacy information being leaked since the SUPI is intercepted, the terminal may generate subscription concealed identifier (SUCI) based on SUPI using a protection scheme of the elliptic curve integrate encrypt scheme (ECIES) and a public key of a home network to protect the user's identity privacy. However, since a base station does not have private key information of the home network, the base station cannot parse a correct SUPI through the SUCI, and cannot identify the identity of the terminal user based on a communication protocol, so that it is difficult to verify legality of the user effectively.

In order to solve the problems existing in the prior art, the embodiments of the present application provide a method, applied to a user terminal, for verifying an access request. The user terminal may be a device having a wireless receiving and sending function, and may be, for example, a mobile phone, an industrial control wireless terminal, a telemedicine wireless terminal, a smart city wireless terminal, a smart home wireless terminal, a 5G mobile internet of things device, and the like. As shown in Fig. 2, on a user terminal side, the method according to the embodiments of the present application includes the following steps.

In S21, an access request message is generated, the access request message carries a cipher text and a signature, the cipher text is determined based on a base station public key of a base station covering the cell where the user terminal is located and an identity identifier of the user terminal, and the signature is determined based on a terminal private key and the identity identifier of the user terminal.

In S22, the access request message is sent to the base station, the access request message is used by the base station to determine whether the user terminal is legal according to the signature and the cipher text obtained by parsing the access request message to determine whether to allow the user terminal to access.

For ease of illustration, a radio resource control (RRC) access request message is given as an example in the embodiments of the present application. It should be understood that, depending on actual requirements, this scheme may further be applied to other types of scenarios, and request other types of network access through the access request message.

In a process in which a user device (for example, a 5G terminal) requests a RRC connection from the base station, under a condition that it is connected for the first time, the user device may generate the access request message using RRCConnectionRequest signaling to apply for a channel resource from the base station.

In order to improve security, a random number or rightmost 40 bits of a temporary mobile subscriber identity (TMSI) may be used as a user device identifier (UE ID) in the access request message for an access request.

In the embodiments of the present application, the access request message carries the cipher text and the signature. The cipher text is determined based on the base station public key and the identity identifier of the user terminal, and the signature is determined based on the terminal private key and the identity identifier of the user terminal. The identity identifier may specifically be the above UE ID, and the UE ID may be generated based on a SUPI of the user terminal, or the identity identifier may further be other identifiers that may indicate the identity of the user terminal.

For example, the user terminal may generate the UE ID based on SUPI by an encryption algorithm, which may be a certain hash operation or perform symmetric encryption using a preset root key K of the terminal.

The user terminal may acquire the base station public key in advance before a step that the user terminal generates the access request message. For example, the base station public key broadcasted by the base station is received by the user terminal. Alternatively, the base station public key may also be acquired by the user terminal through other secure channels, so that the cipher text is generated using the base station public key. The base station can unifiedly send the base station public key to the user terminals in the cell by broadcasting, which has an advantage of high efficiency.

The user terminal applies for the terminal public key and the terminal private key from a combined public key CPK management center based on a combined public key (CPK) mechanism, so that the signature is generated using the terminal private key.

Through the scheme according to the embodiments of the present application, a lightweight access authentication mechanism may be established between the user terminal and the base station, and the base station may verify the legality of the user terminal by parsing the access request message, so that it is effectively determined whether an access terminal is a legal terminal or an illegal terminal. Under a condition that the illegal terminal initiates a DoS attack, the scheme according to the embodiments of the present application facilitates that the base station efficiently identify the illegal terminal, thereby avoiding occupation of a base station resource, and effectively preventing the DoS attack.

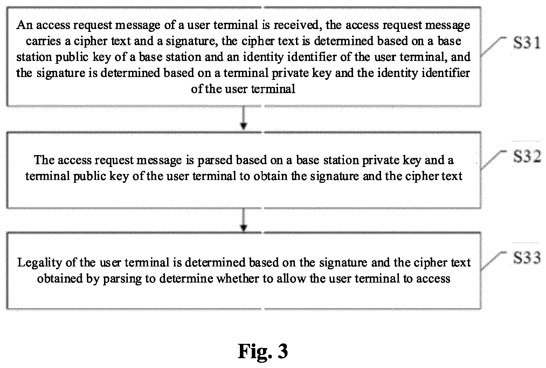

In order to solve the problem existing in the prior art, the embodiments of the present application provide a method, applied to a base station, for verifying an access request, and the method includes the following steps as shown in Fig. 3.

In S31, an access request message of a user terminal is received, the access request message carrying a cipher text and a signature. The cipher text is determined based on a base station public key of a base station and an identity identifier of the user terminal, and the signature is determined based on a terminal private key and the identity identifier of the user terminal.

In S32, the access request message is parsed based on a base station private key and a terminal public key of the user terminal to obtain the signature and the cipher text.

In S33, legality of the user terminal is determined according to the signature and the cipher text obtained by parsing to determine whether to allow the user terminal to access.

On a base station side, the received access request message is parsed to obtain the signature and the cipher text in the access request message. Since the cipher text is generated based on the base station public key, the base station private key may be used to perform parsing. Since the signature is generated based on the terminal private key, the terminal public key may be used to perform parsing.

After the signature and the cipher text are obtained by parsing, the legality of the signature and the cipher text may be verified. Specifically, the legality may be verified based on an identity identifier in the signature and an identity identifier in the cipher text, and the user terminal is allowed to access after the verification succeeds.

Through the scheme according to the embodiments of the present application, the base station parses the access request message to obtain the cipher text and the signature, and verifies the legality of the user terminal based on the cipher text and the signature, and then allows the user terminal to access under a condition that the verification is legal. Under a condition that the illegal terminal initiates a DoS attack, the scheme according to the embodiments of the present application facilitates that the base station efficiently identify the illegal terminal, thereby avoiding occupation of a base station resource, and effectively preventing the DoS attack.

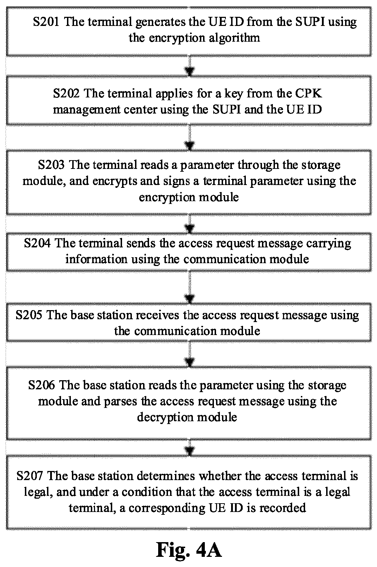

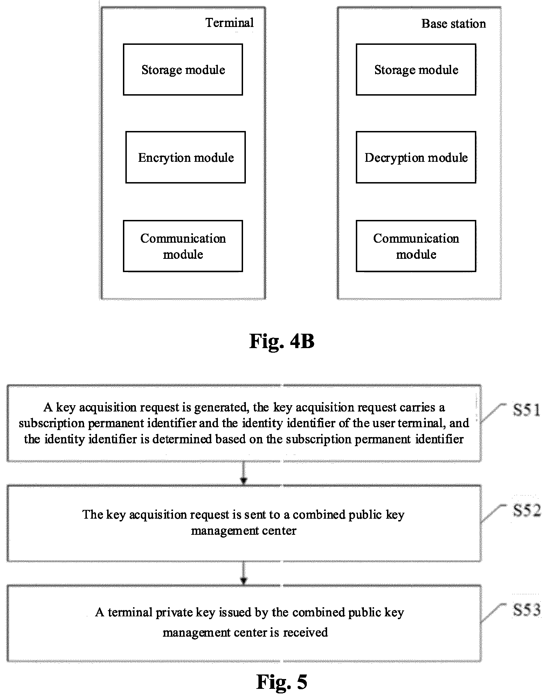

This scheme is further explained below with reference to Fig. 4A; in this instance, the base station is communicatively connected to the user terminal, and the base station is a base station covering the cell to which the user terminal belongs. Schematic structural views of the base station and the terminal are shown in Fig. 4B, the user terminal may include a storage module, an encryption module and a communication module, and the base station may include a storage module, a decryption module and a communication module.

In S201, the terminal generates the UE ID from the SUPI by the encryption algorithm, which may be the certain hash operation or perform the symmetric encryption using the preset root key K of the terminal.

The SUPI may be effectively encrypted by the encryption algorithm, and the obtained UE ID may be used for characterizing the identity of the user terminal, and can further effectively improve security.

In S202, the terminal applies for a key from the CPK management center through the SUPI and the UE ID.

In this instance, the user terminal applies for the key from the CPK management center to obtain a pair of terminal public key and terminal private key. In addition, the user terminal may further obtain the base station public key broadcasted by the base station.

In S203, the terminal reads a parameter through the storage module, and encrypts and signs a terminal parameter using the encryption module.

The terminal parameter specifically includes the identity identifier of the user terminal. The user terminal generates the cipher text using the base station public key and the terminal parameter, and generates the signature using the terminal private key and the terminal parameter.

In S204, the terminal sends the access request message carrying information such as the cipher text and the signature through the communication module.

The user terminal sends the access request message to a network side through the communication module, and a device on the network side includes the base station covering the cell where the terminal is located.

In S205, the base station receives the access request message through the communication module.

In S206, the base station reads the parameter through the storage module and parses the access request message using the decryption module, the parsing process including performing decryption and signature verification on the terminal parameter.

The base station may acquire a parameter required for parsing the access request message in advance and store the parameter in the storage module. Specifically, the base station may acquire the terminal public key in advance and derive a pair of base station public key and base station private key in advance. The decryption module parses the access request message to obtain the cipher text and the signature. Furthermore, the cipher text generated based on the base station public key is further parsed using the base station private key, and the signature generated based on the terminal private key is further parsed using the terminal public key.

In S207, the base station determines integrity of the terminal parameter based on parsed data and determines whether the access terminal is legal; under a condition that the access terminal is a legal terminal, access is allowed and a corresponding UE ID is recorded; and under a condition that the access terminal is an illegal terminal, a data packet is discarded.

In this step, the base station verifies the legality of the user terminal based on the signature and the cipher text after parsing, and under a condition that the verification succeeds, the user terminal is allowed to access. Furthermore, an identity information of the user terminal allowed to access (that is, UE ID) may be recorded. Under a condition that the verification fails, it means that the access request message is sent by the illegal terminal, and the data packet may be discarded, thereby avoiding occupation of the base station resource by the illegal terminal, and effectively preventing the DoS attack.

Through the scheme according to the embodiments of the present application, the user terminal generates the UE ID from the SUPI by the encryption algorithm, then applies for a pair of public key and private key from the CPK management center through the SUPI and the UE ID, and the base station itself derives a pair of public key and private key. The terminal encrypts and signs the terminal parameter using the base station public key and the terminal private key, the terminal sends the access request message, and the base station performs decryption and signature verification on the access request message to determine the legality of the terminal, and can record the legal terminal UE ID at the same time to facilitate source tracing.

Based on the scheme according to the above embodiment, in an embodiment, as shown in Fig. 5, on the base station side, before the above step S21, the method further includes following steps.

In S51, a key acquisition request is generated, the key acquisition request carries a SUPI and the identity identifier of the user terminal, and the identity identifier is determined based on the SUPI.

In this step, the user terminal generates the identity identifier UE ID based on the subscription concealed identifier SUPI using the encryption algorithm, and the encryption algorithm includes a hash algorithm or performs the symmetric encryption using the preset root key K of the terminal, so that privacy of the SUPI is protected, the privacy of the SUPI is prevented from being eavesdropped by the attacker while uniqueness of the terminal UE ID is ensured, and the base station records the UE ID to achieve effect of source tracing. The UE ID is a network-wide unique identifier of the terminal that can effectively indicate the identity of the user terminal and will not be repeated with that of other terminals.

In S52, the key acquisition request is sent to a combined public key management center.

The terminal registers with and applies for the key from the CPK management center through the UE ID and derives a pair of private key sk_ue and public key PK_ue. In an embodiment, the CPK management center may also preset an elliptic curve parameter for the base station in an off-line manner or other manners, so that the base station derives a pair of base station public key and base station private key based on the preset parameter, and a base station public key PK_gnb is issued to the user terminal by the base station by broadcasting or in other manners. Therefore, the user terminal encrypts and signs a terminal parameter containing the identity identifier using the base station public key PK_gnb and the terminal private key sk_ue, and sends the access request message carrying the cipher text and the signature.

In S53, a terminal private key issued by the combined public key management center is received.

The CPK management center sends the terminal private key sk_ue to the terminal device in an off-line manner or through a secure channel.

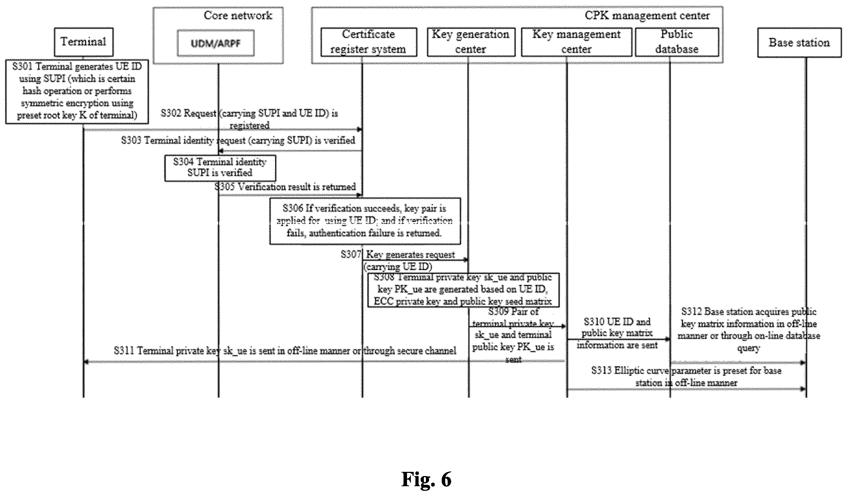

This scheme is further explained below with reference to FIG. 6. The terminal shown in Fig. 6 is the user terminal, and the base station is the base station covering the cell where the user terminal is located. In addition, the function of a unified data manager (UDM) and authentication credential repository and processing function (ARPF) of a core network includes storing identity credentials SUPI of all terminals. The CPK management center includes a certificate registration system, a key generation center, a key management center, and a public database. The user terminal acquires the terminal private key through registration carrying the UE ID, and the base station may acquire the public key matrix corresponding to the terminal private key. Specific steps include the following steps.

In S301, the terminal generates the UE ID based on the above step S201.

In S302, the terminal sends a registration request to the certificate registration system, and the registration request carries the SUPI and the UE ID.

In S303, the certificate registration system sends a request carrying the SUPI to the UDM/ARPF of the core network to verify the identity of the terminal.

In S304, the UDM/ARPF of the core network verifies the terminal identity SUPI based on the received request.

In S305, the core network returns a verification result to the certificate registration system.

In S306, under a condition that the verification succeeds, the certificate registration system applies for a key pair using the UE ID; and under a condition that the verification fails, an authentication failure is returned to the terminal.

In S307, under a condition that the verification succeeds, the certificate registration system sends a key generation request to the key generation center, and the key generation request carries the UE ID.

In S308, the key generation center derives the terminal private key sk_ue and a terminal public key PK_ue based on the UE ID, an elliptic curve cryptography (ECC) private key, and a public key seed matrix.

In S309, the key generation center sends the private key sk_ue and the public key PK_ue to the key management center.

In S310, the key management center sends the UE ID and public key matrix information to the public database.

In S311, the key management center sends the private key sk_ue to the user terminal in an off-line manner or through the secure channel.

In S312, the base station acquires the public key matrix information in an off-line manner or through an on-line database query.

In S313, the key management center presets the elliptic curve parameter for the base station in an off-line manner.

The step S313 is optional, and the base station may also derive a pair of base station public key and base station private key in other manners. Through the scheme according to the embodiments of the present application, the user terminal may request the combined public key CPK management center to derive a pair of terminal public key and terminal private key, and acquire the terminal private key issued by the combined public key CPK management center. In this scheme, the combined public key CPK management center includes the certificate registration system, the key generation center, the key management center, and the public database. Applying for the key from the combined public key CPK management center by the user terminal using the UE ID is applicable to a decentralized key management of mass 5G mobile terminals and can facilitate determination of the legality of the terminal by the base station based on a database of the CPK at the same time, so that malicious terminals are prevented from running out RRC connection resources, and an air interface DoS attack is reduced.

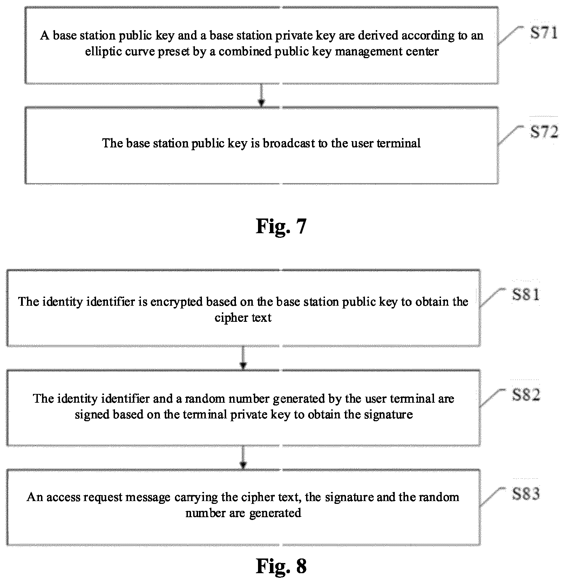

On the base station side, based on the scheme according to the above embodiment, as shown in Fig. 7, before the above step S31, the method further includes: S71 and S72.

In S71, a base station public key and a base station private key are derived according to an elliptic curve preset by a combined public key management center.

In S72, the base station public key is broadcast to the user terminal.

In this instance, the elliptic curve is pre-configured to the base station by the combined public key management center, so that the base station derives a pair of base station public key and base station private key based on the preset elliptic curve. The base station public key PK_gnb is disclosed to the user terminal by broadcasting, so that the user terminal generates the cipher text based on the base station public key. The base station private key sk_gnb is stored locally in the base station and used for parsing the cipher text in the access request message sent by the user terminal. Through the scheme according to this instance, a pair of public key and private key is derived by the base station under the configuration of the combined public key management center to improve verification validity of the access request.

Based on the scheme according to the above embodiment, in an embodiment, on a user terminal side, as shown in Fig. 8, the above step S11 includes the following steps.

In S81, the identity identifier is encrypted based on the base station public key to obtain the cipher text.

In S82, the identity identifier and a random number generated by the user terminal are performed signature processes based on the terminal private key to obtain the signature.

In S83, an access request message carrying the cipher text, the signature and the random number are generated.

In this instance, the user terminal encrypts the identity identifier UE ID based on the base station public key to obtain the cipher text. The obtained cipher text may be denoted as M = E_{PK_gnb}[UE ID].

Subsequently, the identity identifier UE ID and the random number *r* are signed based on the terminal private key, and the random number r is generated by the user terminal itself. In this instance, the identity identifier and the random number which are singed are referred to as terminal parameters and are denoted as R = {UE ID, random number r}, and SIGN = E_{sk_ue}[HASH[R]] are obtained by signature processes.

Next, the access request message is generated, and the access request message carries the cipher text M, the signature SIGN, and the random number r described above.

Through the scheme according to the embodiments of the present application, the access request message carrying the cipher text, the signature, and the random number can be generated, which can further improve the verification validity of the access request.

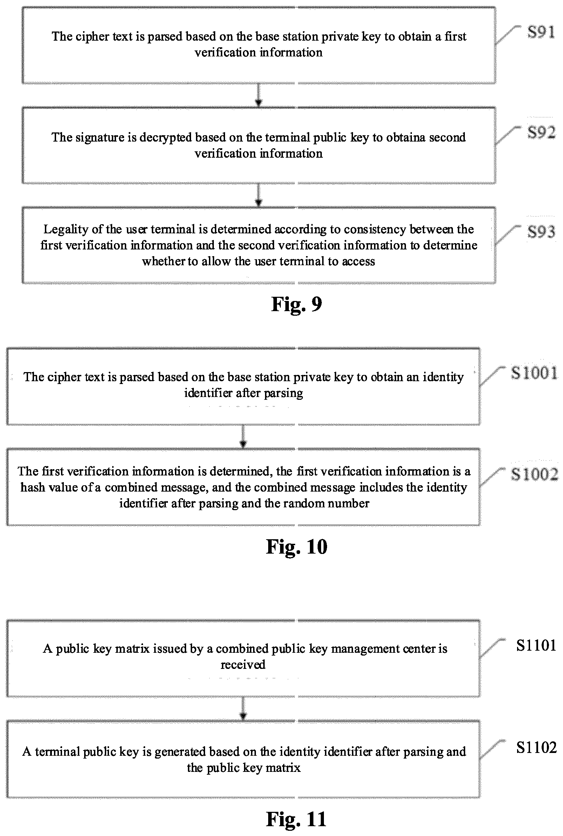

Based on the scheme of the above embodiment, in an embodiment, on the base station side, as shown in Fig. 9, the above step S33 includes the following steps.

In S91, the cipher text is parsed based on the base station private key to obtain a first verification information.

In S92, the signature is decrypted based on the terminal public key to obtain a second verification information.

In S93, legality of the user terminal is determined according to consistency between the first verification information and the second verification information to determine whether to allow the user terminal to access.

In the scheme of the embodiments of the present application, the cipher text and the signature in the access request message are processed, respectively. Since both the cipher text and the signature are determined based on the identity identifier, the first verification information and the second verification information corresponding to the identity identifier may be obtained by parsing, respectively, and then the consistency between two kinds verification information is compared to achieve the verification of the user terminal.

For example, the base station parses the cipher text based on the base station private key to obtain the first verification information corresponding to the UE ID. The base station decrypts the signature based on the terminal public key to obtain second verification information corresponding to the UE ID. The first verification information and the second verification information corresponding to the UE ID may be the UE ID, or may be information obtained based on the UE ID, for example, a hash value of the UE ID.

Through the scheme of the embodiments of the present application, the cipher text and the signature in the access request message are processed, respectively, and the base station private key and the terminal public key are used in the processing, that is, two pairs of public key and private key are applied to verify the access request message to improve the verification validity.

Based on the scheme of the above embodiment, in an embodiment, on the base station side, as shown in Fig. 10, the access request message further carries the random number generated by the user terminal.

The step S91 includes the following steps.

In S 1001, the cipher text is parsed based on the base station private key to obtain an identity identifier after parsing.

In S1002, the first verification information is determined, which is a hash value of a combined message including the identity identifier after parsing and the random number.

In this instance, since the cipher text is obtained by the user terminal encrypting the UE ID based on the base station public key, the UE ID before encryption may be obtained by the base station through parsing the base station private key.

After the UE ID is obtained by parsing, the random number *r* carried in the access request message and the parsed UE ID are combined as R = {UE ID, random number r}, then a hash value HASH [R] of the combined message is calculated, and the combined message matches a content of the user terminal before signature.

Since the signature generated by the user terminal is SIGN = E_{sk_ue}[HASH [R]], in the step of decrypting the signature based on the terminal public key to obtain the second verification information, the above signature SIGN is decrypted based on the terminal public key, and HASH [R] can be obtained. Under a condition that the first verification information determined in this instance S1002 is consistent with the obtained second verification information, the verification succeeds. In the scheme of the embodiments, the access request message carries the random number r generated by the user terminal, which can further improve verification validity of the access request message.

Based on the scheme according to the above embodiment, in an embodiment, on the base station side, as shown in Fig. 11, before the above step S31, the method further includes the following steps.

In S1101, a public key matrix issued by a combined public key management center is received.

Before the above step S92, the method further includes the following steps.

In S1102, a terminal public key is generated based on the identity identifier after parsing and the public key matrix.

In this instance, the base station may acquire public key matrix information about the terminal from the CPK management center in an off-line manner or through an on-line database query. The base station can derive the terminal public key PK_ue through the UE ID and the terminal public key matrix information. Subsequently, the base station parses the access request message using the base station private key sk_gnb and the terminal public key Pk_ue obtained by deriving, and verifies the access request message through the schemes described in any one of the above embodiments to determine whether the terminal is legal, so that the air interface DoS attack can be effectively prevented, and the terminal identity identifier UE ID may also be recorded to facilitate source tracing.

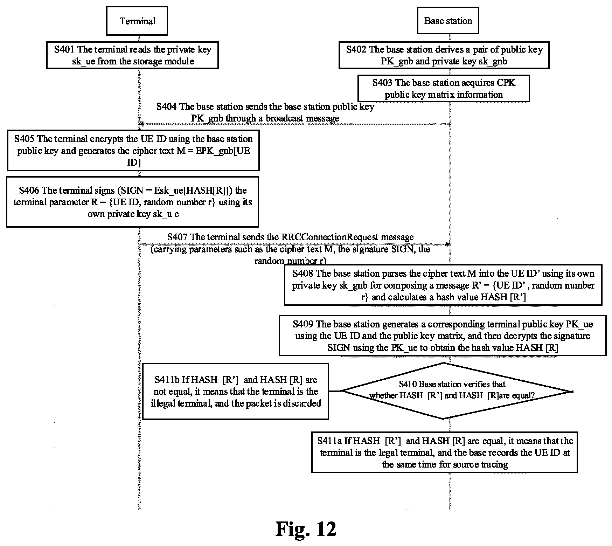

This scheme is further explained below with reference to an instance and Fig. 12 below. In this instance, it is assumed that the access request message is an RRCConnectionRequest message, and the procedure is as follows.

In S401, the terminal reads the private key sk_ue from the storage module.

The terminal private key sk_ue may be issued to the user terminal by the combined public key management center based on the method described in the above embodiments, and then stored in the storage module by the user terminal to be read when in use.

In S402, the base station derives a pair of public key PK_gnb and private key sk_gnb.

A pair of base station public key and base station private key derived by the base station may be derived based on the elliptic curve preset by the combined public key management center, and may be stored in the storage module local to the base station.

In S403, the base station acquires CPK public key matrix information.

The public key matrix may be acquired by the base station from a CPK management center in an off-line manner or through an on-line database, and the like.

In S404, the base station sends the base station public key PK_gnb by broadcasting message.

After deriving a pair of base station public key and base station private key, the base station may disclose the base station public key to the user terminal by broadcasting.

In S405, the terminal encrypts the UE ID using the base station public key PK_gnb and generates the cipher text M = E_{PK_gnb}[UE ID].

In S406, the terminal generates the random number r and signs the terminal parameter R = {UE ID, random number r} using its own private key sk_ue, where SIGN = Esk _ue[HASH[R]].

In S407, the terminal sends the RRCConnectionRequest message carrying parameters such as the cipher text M, the signature SIGN, the random number *r*.

In S408, the base station parses the cipher text M into the UE ID using its own private key sk_gnb for composing a message R' = {UE ID, random number r} and calculates a hash value HASH [R'].

In S409, the base station generates a corresponding terminal public key PK_ue using the UE ID and the public key matrix, and then decrypts the signature SIGN using the PK_ue to obtain the hash value HASH [R].

In S410, the base station verifies that whether the HASH [R'] is equal to the HASH [R].

In S411a, under a condition that the HASH [R'] is equal to the HASH [R], it means that the terminal is the legal terminal, and the base station assigns the channel resource for the terminal, and records the UE ID of the terminal at the same time for source tracing.

In S411b, under a condition that the HASH [R'] is not equal to the HASH [R], it means that the terminal is the illegal terminal, and the data packet is discarded.

According to the scheme of the embodiments of the present application, the random number, a pair of terminal public key and terminal private key, and a pair of base station public key and base station private key are generated by the user terminal to cooperatively verify the access request message. Therefore the legality of the user terminal is effectively verified, which effectively prevents the malicious terminals from initiating the DoS attack to occupy the base station resources.

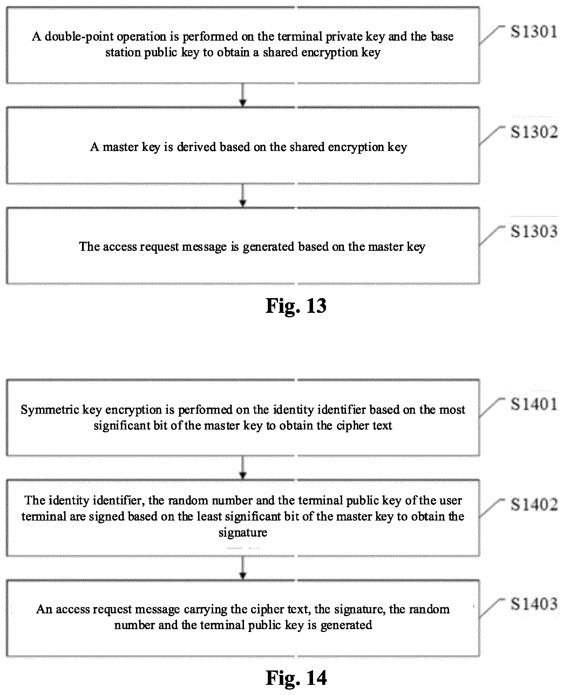

Based on the scheme of the above embodiments, in an embodiment, on the terminal side, as shown in Fig. 13, before the above S21, the method further includes the following steps.

In S1301, a point doubling operation is performed on the terminal private key and the base station public key to obtain a shared encryption key.

In S1302, a master key is derived based on the shared encryption key.

S21 includes the following step: S1303.

In S1303, the access request message is generated based on the master key.

In this embodiment, a pair of terminal public key and terminal private key of the user terminal and a pair of base station public key and base station private key of the base station are derived based on the same elliptic curve. Under a condition that either of their own private keys is not disclosed, the same symmetric key, that is, the shared encryption key described in this instance, can be derived using one of their own private keys and the other's public key.

On the user terminal side, before the access request message is generated, the point doubling operation is performed on the terminal private key and the base station public key in advance to obtain the shared encryption key, and then the access request message is generated using the shared encryption key.

In the scheme of this instance, the access request message can be generated using the terminal private key and the base station public key, and key security can be further improved through the point doubling operation, thereby avoiding disclosure of the private key.

Based on the scheme of the above embodiments, in an embodiment, on the user terminal side, as shown in Fig. 14, the step S1303 includes the following steps.

In 1401, a symmetric encryption is performed on the identity identifier based on the most significant bit of the master key to obtain the cipher text.

In 1402, the identity identifier, the random number and the terminal public key of the user terminal are performed signature processes based on the least significant bit of the master key to obtain the signature.

In 1403, an access request message carrying the cipher text, the signature, the random number and the terminal public key is generated.

In this instance, under a condition that the cipher text is generated, the symmetric encryption is performed on the identity identifier using the most significant bit of the above master key, which is beneficial to improve verification efficiency while ensuring encryption security.

After the cipher text is obtained through the symmetric encryption, the random number r and the terminal public key PK_ue are signed using the least significant bit of the above master key to achieve integrity protection.

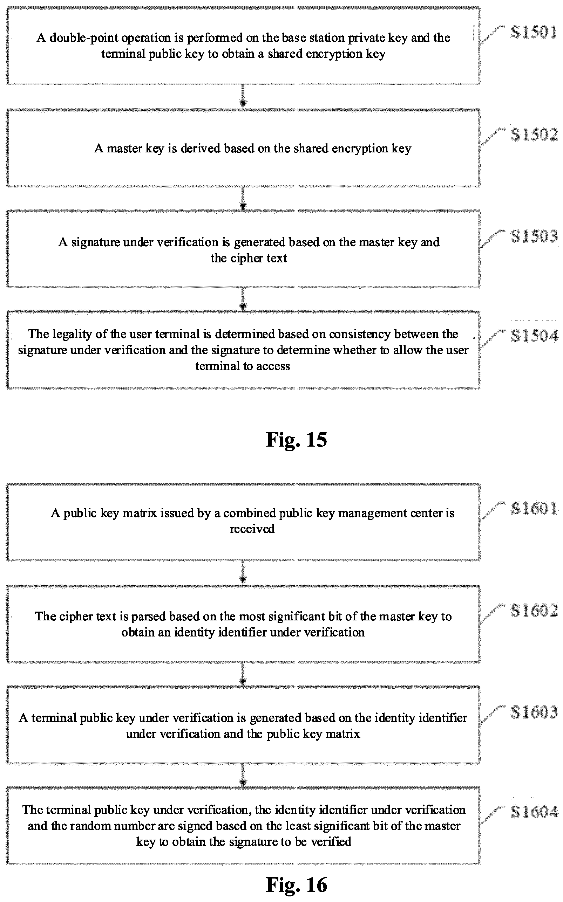

Based on the scheme of the above embodiment, in an embodiment, on the base station side, as shown in Fig. 15, the access request message further carries the terminal public key of the user terminal.

The step S33 includes the following steps.

In S1501, a point doubling operation is performed on the base station private key and the terminal public key to obtain a shared encryption key.

Corresponding to the above manner in which the shared encryption key is generated on the user terminal side, in this scheme, on the base station side, the point doubling operation is performed on the base station private key and the terminal public key. Since a pair of terminal public key and terminal private key and a pair of base station public key and base station private key derived in advance use the same elliptic curve, on the user terminal side and the base station side, one of their own private keys and the other's public key can derive the same shared encryption key.

In S1502, a master key is derived based on the shared encryption key.

Corresponding to the above manner in which the master key is generated on the user terminal side, a master key, which is consistent with the master key generated by the user terminal, is generated on the base station side based on the shared encryption key.

In S1503, a signature to be verified is generated based on the master key and the cipher text.

In this instance, the cipher text may be decrypted first to obtain the UE ID in the cipher text, then the UE ID obtained by decryption is signed based on the above master key to obtain the signature to be verified.

In S1504, the legality of the user terminal is determined based on consistency between the signature to be verified and the signature to determine whether to allow the user terminal to access.

Under a condition that the user terminal is legal, master keys generated by the user terminal and the base station are consistent, and after the signature is performed in the same manner, the signature in the access request message should be consistent with the signature to be verified and generated by the base station. Therefore, the legality of the user terminal may be effectively verified by determining the consistency between the signature to be verified and the signature in the access request message.

Based on the scheme of the above embodiment, in an embodiment, on the base station side, as shown in Fig. 16, the access request message further carries the random number generated by the user terminal.

Before the above step S31, the method further includes the following steps.

In S1601, a public key matrix issued by a combined public key management center is received.

The step S1503 includes the following steps.

In S1602, the cipher text is parsed based on the most significant bit of the master key to obtain an identity identifier to be verified.

In S1603, a terminal public key to be verified is generated based on the identity identifier to be verified and the public key matrix.

In S1604, the terminal public key to be verified, the identity identifier to be verified and the random number are performed signature process based on the least significant bit of the master key to obtain the signature to be verified.

In this instance, the user terminal may request the combined public key management center in advance to derive a pair of terminal public key and terminal private key, and the combined public key management center issues the public key matrix information to the base station in an off-line manner or through an on-line database.

On the base station side, the terminal public key of the user terminal may be determined based on the public key matrix and the identity identifier UE ID of the user terminal. Parsing is performed based on the cipher text in the access request message, a manner of parsing corresponds to a manner in which the cipher text is generated on the user terminal side, and parsing is performed using the most significant bit of the master key to obtain an identity identifier UE ID to be verified of the user terminal. A terminal public key to be verified of the user terminal may be generated based on the identity identifier UE ID under verification and the above public key matrix.

Subsequently, corresponding to a manner in which the signature process is performed on the user terminal side, in this instance, the terminal public key to be verified, the identity identifier to be verified and the random number are signed by the base station based on the least significant bit of the master key, and under a condition that the signature to be verified obtained by performing signature process is consistent with the signature in the access request message, it means that the user terminal is the legal terminal.

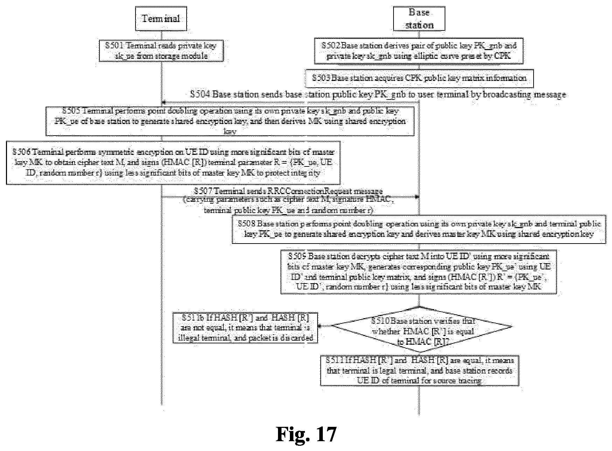

This scheme is further explained with reference to Fig. 17 below. In this instance, it is assumed that the access request message specifically is the RRCConnectionRequest message.

As shown in Fig. 17, under a condition of deriving the public keys and the private keys using the same elliptic curve, the terminal and the base station may derive the same symmetric key using one of their own private keys and the other's public key without disclosing either of their own private keys. In this instance, the base station needs the combined public key management center to preset the elliptic curve parameter, and uses the symmetric key in both the encryption process and the signature process, which can effectively improve the verification efficiency. The specific procedure is as follows.

In S501, the terminal reads the private key sk_ue from the storage module.

In S502, the base station derives a pair of public key PK_gnb and private key sk_gnb using the elliptic curve preset by the combined public key management center.

In S503, the base station acquires CPK public key matrix information.

In S504, the base station sends the base station public key PK_gnb to the user terminal by broadcasting message.

In S505, the terminal performs the point doubling operation using its own private key sk_ue and the public key PK_gnb of the base station to generate the shared encryption key, and then derives a master key (MK) using the shared encryption key.

In S506, the terminal takes out the more significant bits of the master key MK, symmetrically encrypts the UE ID to obtain a cipher text M, and uses the less significant bits of the master key MK to sign the terminal parameter R = {PK_ue, UE ID, random number r} as HMAC [R], so as to perform integrity protection.

In S507, the terminal sends the RRCConnectionRequest message carrying parameters such as the cipher text M, the signature HMAC, the terminal public key PK_ue, and the random number *r*.

In S508, the base station performs the point doubling operation using its own private key sk_gnb and the terminal public key PK_ue to generate the shared encryption key, and then derives the master key MK using the shared encryption key.

In S509, the base station decrypts the cipher text M into a UE ID' using the more significant bits of the master key MK, generates a corresponding public key PK_ue' using the UE ID' and the terminal public key matrix, and signs R' = {PK_ue', UE ID', random number *r*} as (HMAC [R']) using the less significant bits of the master key MK.

In S510, the base station verifies that whether the HMAC [R'] is equal to HMAC [R].

In S511a, under a condition that the HASH [R'] is equal to the HASH [R], it means that the terminal is the legal terminal, and the base station assigns the channel resource for the terminal, and records the UE ID of the terminal at the same time for source tracing.

In S511b, under a condition that the HASH [R'] is not equal to the HASH [R], it means that the terminal is the illegal terminal, and the packet is discarded.

Through the scheme of the embodiments of the present application, after a pair of base station public key and base station private key and a pair of terminal public key and terminal private key are derived based on the same elliptic curve, efficiency of the base station for verifying the access request message is effectively improved through the symmetric encryption while ensuring security and validity of the verification.

In order to solve the problem existing in the prior art, the embodiments of the present application further provide a user terminal 180 including a generation module 181 and a sending module 182, as shown in Fig, 18.

The generation module 181 is configured to generate an access request message, which carries a cipher text and a signature. The cipher text is determined based on a base station public key of a base station covering the cell where the user terminal is located and an identity identifier of the user terminal, and the signature is determined based on a terminal private key and the identity identifier of the user terminal

The sending module 182 is configured to send the access request message to the base station. The access request message is used by the base station to determine whether the user terminal is legal based on the signature and the cipher text obtained by parsing the access request message to determine whether to allow the user terminal to access.

In the user terminal of the embodiments of the present application, the access request message is generated, which carries the cipher text and the signature. The cipher text is determined based on the base station public key of the base station covering the cell where the user terminal is located and the identity identifier of the user terminal, and the signature is determined based on the terminal private key and the identity identifier of the user terminal. The access request message is sent to the base station and is used by the base station to determine whether the user terminal is legal based on the signature and the cipher text obtained by parsing the access request message to determine whether to allow the user terminal to access; and the cipher text and the signature carried in the access request message can be used by the base station to verify whether the user terminal is the legal terminal, and then to determine whether to allow the user terminal to access, which improves the verification validity of the network access request and is beneficial to prevent the DoS attack.

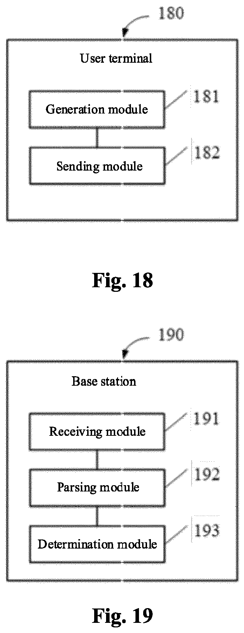

In order to solve the problem existing in the prior art, the embodiments of the present application further provide a base station 190 including a receiving module 191, a parsing module 192 and a determination module 193, as shown in Fig. 19.

The receiving module 191 is configured to receive an access request message of a user terminal, which carries a cipher text and a signature. The cipher text is determined based on a base station public key of a base station and an identity identifier of the user terminal, and the signature is determined based on a terminal private key and the identity identifier of the user terminal.

The parsing module 192 is configured to parse the access request message based on a base station private key and a terminal public key of the user terminal to obtain the signature and the cipher text.

The determination module 193 is configured to determine legality of the user terminal according to the signature and the cipher text obtained by parsing to determine whether to allow the user terminal to access.

In the base station of the embodiments of the present application, the received access request message carries the cipher text and the signature, the cipher text is determined based on the base station public key of the base station covering the cell where the user terminal is located and the identity identifier of the user terminal, and the signature is determined based on the terminal private key and the identity identifier of the user terminal; and the legality of the user terminal can be verified based on the signature and the cipher text by parsing the access request message to determine whether to allow the user terminal to access, which improves the verification validity of the network access request and is beneficial to prevent the DoS attack.

The above modules of the apparatus of the embodiments of the present application may further implement steps of the method according to the above embodiments of the method. Alternatively, the apparatus of the embodiments of the present application may further include other modules other than those described above for implementing steps of the method according to the above embodiments of the method. In addition, the apparatus according to the embodiments of the present application can achieve the technical effects that can be achieved by the above embodiments of the method.

In an embodiment, the present application further provides an electronic device including a processor, a memory, and a computer program stored in the memory and executable on the processor. The computer program, when executed by the processor, implements various processes of the above embodiments of the method for verifying the access request and can achieve the same technical effects, which is not described here in order to avoid repetition.

The embodiments of the present application further provide a computer readable storage medium storing a computer program thereon, and the computer program, when executed by a processor, implements various processes of the above embodiments of the method for verifying the access request and can achieve the same technical effects, which is not described here in order to avoid repetition. The computer readable storage medium may be, for example, a Read-Only Memory (ROM), a Random Access Memory (RAM), a magnetic disk, or a compact disc.

It will be appreciated by those skilled in the art that the embodiments of the present application may be provided as a method, system, or computer program product. Therefore, the present application may take a form of full hardware embodiments, full software embodiments or embodiments combining software and hardware aspects. Moreover, the present application may take a form of a computer program product implemented on one or more computer usable storage media (including, but not limited to, a disk storage, a CD-ROM, an optical storage, and the like) containing a computer usable program code therein.

The present application is described with reference to flowcharts and/or block diagrams of the method, the apparatus (system) and the computer program product according to the embodiments of the present application. It should be understood that, each flow and/or block of the flowcharts and/or block diagrams and combinations of flows and/or blocks in the flowcharts and/or block diagrams may be implemented by computer program instructions. These computer program instructions may be provided to a processor of a general purpose computer, special purpose computer, embedded processor or other programmable data processing devices to produce a machine, so that the instructions executed by the processor of the computer or other programmable data processing devices produce apparatuses for implementing functions specified in one or more flows of the flowcharts and/or one or more blocks of the block diagrams.

These computer program instructions may also be stored in a computer readable memory that can direct a computer or other programmable data processing devices to operate in a specific manner, so that the instructions stored in the computer readable memory produce an article including instruction apparatuses, and the instruction apparatuses implement the functions specified in one or more flows of the flowcharts and/or one or more blocks of the block diagrams.

These computer program instructions may also be loaded onto the computer or other programmable data processing devices to cause a series of operational steps to be executed on the computer or other programmable devices to produce computer implemented processes, so that the instructions executed on the computer or other programmable devices provide steps for implementing the functions specified in one or more flows of the flowcharts and/or one or more blocks of the block diagrams.

In a typical configuration, a computing device includes one or more processors CPU, input/output interfaces, network interfaces, and a memory.

The memory may take a form of a non-persistent memory, a random access memory (RAM), and/or non-volatile memory (such as a read only memory (ROM) or a flash memory (flash RAM)) in a computer readable medium. The memory is an example of the computer readable medium.

The computer readable medium a permanent/ non-permanent medium, or a removable/non-removable medium, which may achieve storage of information by any method or technology. The information may be computer readable instructions, data structures, modules of a program, or other data. Examples of the computer storage medium include, but are not limited to, a phase random access memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a compact disc read only memory (CD-ROM), a digital versatile disc (DVD) or other optical storage, a magnetic cassette, magnetic tape magnetic disk storage or other magnetic storage devices, or any other non-transmission medium, which may be used for storing information accessible to the computing device. As defined herein, the computer readable medium does not include a transitory media such as a modulated data signal or a carrier wave.

It should also be noted that Moreover, the terms "comprise", "include", or any other variants thereof, are intended to represent a non-exclusive inclusion, so that a process, method, commodity or device including a series of elements includes not only those elements, but also other elements that are not explicitly listed or elements inherent to such a process, method, commodity or device. Without more constraints, an element following an expression "comprise/include a/an..." does not mean that the existence of an additional identical element in the process, method, commodity or device is excluded.

It will be appreciated by those skilled in the art that the embodiments of the present application may be provided as a method, system, or computer program product. Therefore, the present application may take a form of full hardware embodiments, full software embodiments or embodiments combining software and hardware aspects. Moreover, the present application may take a form of a computer program product implemented on one or more computer usable storage media (including, but not limited to, a disk storage, a CD-ROM, an optical storage, and the like) containing a computer usable program code therein.

## Claims

1. A method, applied to a user terminal, for verifying an access request, comprising:
generating an access request message, wherein the access request message carries a cipher text and a signature, the cipher text is determined based on a base station public key of a base station covering a cell where the user terminal is located and an identity identifier of the user terminal, and the signature is determined based on a terminal private key and the identity identifier of the user terminal; and
sending the access request message to the base station, wherein the access request message is for the base station to determine whether the user terminal is legal based on the signature and the cipher text obtained by parsing the access request message to determine whether to allow the user terminal to access.

2. The method according to claim 1, wherein the generating an access request message comprises:
encrypting the identity identifier based on the base station public key to obtain the cipher text;
performing a signature process on the identity identifier and a random number generated by the user terminal based on the terminal private key to obtain the signature; and
generating the access request message carrying the cipher text, the signature and the random number.

3. The method according to claim 2, wherein before the generating an access request message, the method further comprises:
performing a point doubling operation on the terminal private key and the base station public key to obtain a shared encryption key; and
deriving a master key based on the shared encryption key,
wherein generating an access request message comprises:
generating the access request message based on the master key.

4. The method according to claim 3, wherein the generating the access request message based on the master key comprises:
performing a symmetric encryption on the identity identifier based on a most significant bit of the master key to obtain the cipher text;
performing a signature process on the identity identifier, the random number, and a terminal public key of the user terminal based on a least significant bit of the master key to obtain the signature; and
generating the access request message carrying the cipher text, the signature, the random number and the terminal public key.

5. The method according to any one of claims 1 to 4, wherein before the generating an access request message, the method further comprises:
receiving a base station public key broadcasted by the base station.

6. The method according to any one of claims 1 to 4, wherein before the generating an access request message, the method further comprises:
generating a key acquisition request, wherein the key acquisition request carries a subscription permanent identifier and the identity identifier of the user terminal, and the identity identifier is determined based on the subscription permanent identifier;
sending the key acquisition request to a combined public key management center; and
receiving a terminal private key issued by the combined public key management center.

7. A method, applied to a base station, for verifying an access request, comprising:
receiving an access request message of a user terminal, wherein the access request message carries a cipher text and a signature, the cipher text is determined based on a base station public key of the base station and an identity identifier of the user terminal, and the signature is determined based on a terminal private key and the identity identifier of the user terminal;
parsing the access request message based on a base station private key and a terminal public key of the user terminal to obtain the signature and the cipher text; and
determining legality of the user terminal according to the signature and the cipher text obtained by parsing to determine whether to allow the user terminal to access.

8. The method according to claim 7, wherein the determining legality of the user terminal according to the signature and the cipher text obtained by parsing to determine whether to allow the user terminal to access comprises:
parsing the cipher text based on the base station private key to obtain a first verification information;
decrypting the signature based on the terminal public key to obtain a second verification information; and
determining legality of the user terminal according to consistency between the first verification information and the second verification information to determine whether to allow the user terminal to access.

9. The method according to claim 8, wherein the access request message further carries a random number generated by the user terminal;
wherein the parsing the cipher text based on the base station private key to obtain a first verification information comprises:
parsing the cipher text based on the base station private key to obtain an identity identifier after parsing; and
determining the first verification information, wherein the first verification information is a hash value of a combined message that comprises the identity identifier after parsing and the random number.

10. The method according to claim 9, wherein before the receiving an access request message of a user terminal, the method further comprises:
receiving a public key matrix issued by a combined public key management center;
wherein before the decrypting the signature based on the terminal public key to obtain a second verification information, the method further comprises:
generating a terminal public key based on the identity identifier after parsing and the public key matrix.

11. The method according to claim 7, wherein the access request message further carries a terminal public key of the user terminal; and
the determining legality of the user terminal according to the signature and the cipher text obtained by parsing to determine whether to allow the user terminal to access comprises:
performing a point doubling operation on the base station private key and the terminal public key to obtain a shared encryption key;
deriving a master key based on the shared encryption key;
generating a signature to be verified based on the master key and the cipher text; and
determining the legality of the user terminal based on consistency between the signature to be verified and the signature to determine whether to allow the user terminal to access.

12. An electronic device, comprising a memory, a processor, and a computer program stored on the memory and executable by the processor, wherein the computer program, when executed by the processor, implements steps of the method according to any one of claims 1 to 6 or any one of claims 7 to 11.

13. A computer readable storage medium storing a computer program thereon, wherein the computer program, when executed by a processor, implements steps of the method according to any one of claims 1 to 6 or any one of claims 7 to 11.

## Patentansprüche

1. Ein Verfahren, angewendet auf ein Benutzerendgerät, zum Verifizieren einer Zugriffsanforderung, umfassend:
Erzeugen einer Zugriffsanforderungsnachricht, wobei die Zugriffsanforderungsnachricht einen Chiffretext und eine Signatur trägt, der Chiffretext basierend auf einem Basisstations-öffentlichen Schlüssel einer Basisstation, die eine Zelle abdeckt, in der sich das Benutzerendgerät befindet, und einem Identitätsbezeichner des Benutzerendgeräts bestimmt ist, und die Signatur basierend auf einem Endgeräte-privaten Schlüssel und dem Identitätsbezeichner des Benutzerendgeräts bestimmt ist; und
Senden der Zugriffsanforderungsnachricht an die Basisstation, wobei die Zugriffsanforderungsnachricht dazu dient, dass die Basisstation basierend auf der Signatur und dem durch Parsen der Zugriffsanforderungsnachricht erhaltenen Chiffretext bestimmt, ob das Benutzerendgerät legal ist, um zu entscheiden, ob dem Benutzerendgerät der Zugriff erlaubt wird.

2. Das Verfahren nach Anspruch 1, wobei das Erzeugen einer Zugriffsanforderungsnachricht umfasst:
Verschlüsseln des Identitätsbezeichners basierend auf dem Basisstations-öffentlichen Schlüssel, um den Chiffretext zu erhalten;
Durchführen eines Signaturprozesses für den Identitätsbezeichner und eine vom Benutzerendgerät erzeugte Zufallszahl basierend auf dem Endgeräte-privaten Schlüssel, um die Signatur zu erhalten; und
Erzeugen der Zugriffsanforderungsnachricht, die den Chiffretext, die Signatur und die Zufallszahl trägt.

3. Das Verfahren nach Anspruch 2, wobei vor dem Erzeugen einer Zugriffsanforderungsnachricht das Verfahren weiter umfasst:
Durchführen einer Punktverdopplungsoperation auf dem Endgeräte-privaten Schlüssel und dem Basisstations-öffentlichen Schlüssel, um einen gemeinsamen Verschlüsselungsschlüssel zu erhalten; und
Ableiten eines Master-Schlüssels basierend auf dem gemeinsamen Verschlüsselungsschlüssel, wobei das Erzeugen einer Zugriffsanforderungsnachricht umfasst:
Erzeugen der Zugriffsanforderungsnachricht basierend auf dem Master-Schlüssel.

4. Das Verfahren nach Anspruch 3, wobei das Erzeugen der Zugriffsanforderungsnachricht basierend auf dem Master-Schlüssel umfasst:
Durchführen einer symmetrischen Verschlüsselung des Identitätsbezeichners basierend auf einem höchstwertigen Bit des Master-Schlüssels, um den Chiffretext zu erhalten;
Durchführen eines Signaturprozesses für den Identitätsbezeichner, die Zufallszahl und einen Endgeräte-öffentlichen Schlüssel des Benutzerendgeräts basierend auf einem niederwertigen Bit des Master-Schlüssels, um die Signatur zu erhalten; und
Erzeugen der Zugriffsanforderungsnachricht, die den Chiffretext, die Signatur, die Zufallszahl und den Endgeräte-öffentlichen Schlüssel trägt.

5. Das Verfahren nach einem der Ansprüche 1 bis 4, wobei vor dem Erzeugen einer Zugriffsanforderungsnachricht das Verfahren weiter umfasst:
Empfangen eines von der Basisstation ausgesendeten Basisstations-öffentlichen Schlüssels.

6. Das Verfahren nach einem der Ansprüche 1 bis 4, wobei vor dem Erzeugen einer Zugriffsanforderungsnachricht das Verfahren weiter umfasst:
Erzeugen einer Schlüsselabrufanforderung, wobei die Schlüsselabrufanforderung einen permanenten Teilnehmerbezeichner und den Identitätsbezeichner des Benutzerendgeräts trägt, und der Identitätsbezeichner basierend auf dem permanenten Teilnehmerbezeichner bestimmt ist;
Senden der Schlüsselabrufanforderung an ein kombiniertes öffentlicher-Schlüssel-Verwaltungszentrum; und
Empfangen eines vom kombinierten öffentlicher-Schlüssel-Verwaltungszentrum ausgegebenen Endgeräte-privaten Schlüssels.

7. Ein Verfahren, angewendet auf eine Basisstation, zum Verifizieren einer Zugriffsanforderung, umfassend:
Empfangen einer Zugriffsanforderungsnachricht eines Benutzerendgeräts, wobei die Zugriffsanforderungsnachricht einen Chiffretext und eine Signatur trägt, der Chiffretext basierend auf einem Basisstations-öffentlichen Schlüssel der Basisstation und einem Identitätsbezeichner des Benutzerendgeräts bestimmt ist, und die Signatur basierend auf einem Endgeräte-privaten Schlüssel und dem Identitätsbezeichner des Benutzerendgeräts bestimmt ist;
Parsen der Zugriffsanforderungsnachricht basierend auf einem Basisstations-privaten Schlüssel und einem Endgeräte-öffentlichen Schlüssel des Benutzerendgeräts, um die Signatur und den Chiffretext zu erhalten; und
Bestimmen der Legalität des Benutzerendgeräts gemäß der Signatur und dem durch Parsen erhaltenen Chiffretext, um zu entscheiden, ob dem Benutzerendgerät der Zugriff erlaubt wird.

8. Das Verfahren nach Anspruch 7, wobei das Bestimmen der Legalität des Benutzerendgeräts gemäß der Signatur und dem durch Parsen erhaltenen Chiffretext, um zu entscheiden, ob dem Benutzerendgerät der Zugriff erlaubt wird, umfasst:
Parsen des Chiffretexts basierend auf dem Basisstations-privaten Schlüssel, um eine erste Verifikationsinformation zu erhalten;
Entschlüsseln der Signatur basierend auf dem Endgeräte-öffentlichen Schlüssel, um eine zweite Verifikationsinformation zu erhalten; und
Bestimmen der Legalität des Benutzerendgeräts gemäß der Konsistenz zwischen der ersten Verifikationsinformation und der zweiten Verifikationsinformation, um zu entscheiden, ob dem Benutzerendgerät der Zugriff erlaubt wird.

9. Das Verfahren nach Anspruch 8, wobei die Zugriffsanforderungsnachricht weiter eine vom Benutzerendgerät erzeugte Zufallszahl trägt;
wobei das Parsen des Chiffretexts basierend auf dem Basisstations-privaten Schlüssel, um eine erste Verifikationsinformation zu erhalten, umfasst:
Parsen des Chiffretexts basierend auf dem Basisstations-privaten Schlüssel, um einen nach dem Parsen erhaltenen Identitätsbezeichner zu erhalten; und
Bestimmen der ersten Verifikationsinformation, wobei die erste Verifikationsinformation ein Hash-Wert einer kombinierten Nachricht ist, die den nach dem Parsen erhaltenen Identitätsbezeichner und die Zufallszahl umfasst.

10. Das Verfahren nach Anspruch 9, wobei vor dem Empfangen einer Zugriffsanforderungsnachricht eines Benutzerendgeräts das Verfahren weiter umfasst:
Empfangen einer vom kombinierten öffentlicher-Schlüssel-Verwaltungszentrum ausgegebenen öffentlichen Schlüsselmatrix;
wobei vor dem Entschlüsseln der Signatur basierend auf dem Endgeräte-öffentlichen Schlüssel, um eine zweite Verifikationsinformation zu erhalten, das Verfahren weiter umfasst:
Erzeugen eines Endgeräte-öffentlichen Schlüssels basierend auf dem nach dem Parsen erhaltenen Identitätsbezeichner und der öffentlichen Schlüsselmatrix.

11. Das Verfahren nach Anspruch 7, wobei die Zugriffsanforderungsnachricht weiter einen Endgeräte-öffentlichen Schlüssel des Benutzerendgeräts trägt; und
das Bestimmen der Legalität des Benutzerendgeräts gemäß der Signatur und dem durch Parsen erhaltenen Chiffretext umfasst:
Durchführen einer Punktverdopplungsoperation auf dem Basisstations-privaten Schlüssel und dem Endgeräte-öffentlichen Schlüssel, um einen gemeinsamen Verschlüsselungsschlüssel zu erhalten;
Ableiten eines Master-Schlüssels basierend auf dem gemeinsamen Verschlüsselungsschlüssel;
Erzeugen einer zu verifizierenden Signatur basierend auf dem Master-Schlüssel und dem Chiffretext; und
Bestimmen der Legalität des Benutzerendgeräts basierend auf der Konsistenz zwischen der zu verifizierenden Signatur und der Signatur, um zu entscheiden, ob dem Benutzerendgerät der Zugriff erlaubt wird.

12. Eine elektronische Vorrichtung, umfassend einen Speicher, einen Prozessor und ein im Speicher gespeichertes und vom Prozessor ausführbares Computerprogramm, wobei das Computerprogramm, wenn es vom Prozessor ausgeführt wird, Schritte des Verfahrens nach einem der Ansprüche 1 bis 6 oder einem der Ansprüche 7 bis 11 implementiert.

13. Ein computerlesbares Speichermedium, auf dem ein Computerprogramm gespeichert ist, wobei das Computerprogramm, wenn es von einem Prozessor ausgeführt wird, Schritte des Verfahrens nach einem der Ansprüche 1 bis 6 oder einem der Ansprüche 7 bis 11 implementiert.

## Revendications

1. Procédé, appliqué à un terminal utilisateur, pour vérifier une requête d'accès, comprenant:
la génération d'un message de requête d'accès, dans lequel le message de requête d'accès transporte un texte chiffré et une signature, le texte chiffré étant déterminé sur la base d'une clé publique de station de base d'une station de base couvrant une cellule dans laquelle le terminal utilisateur est situé et d'un identifiant d'identité du terminal utilisateur, et la signature étant déterminée sur la base d'une clé privée de terminal et de l'identifiant d'identité du terminal utilisateur; et
l'envoi du message de requête d'accès à la station de base, le message de requête d'accès étant destiné à permettre à la station de base de déterminer si le terminal utilisateur est légitime sur la base de la signature et du texte chiffré obtenus par l'analyse du message de requête d'accès afin de déterminer s'il convient d'autoriser le terminal utilisateur à accéder.

2. Procédé selon la revendication 1, dans lequel la génération d'un message de requête d'accès comprend:
le chiffrement de l'identifiant d'identité sur la base de la clé publique de station de base afin d'obtenir le texte chiffré;
la réalisation d'un processus de signature sur l'identifiant d'identité et un nombre aléatoire généré par le terminal utilisateur sur la base de la clé privée de terminal afin d'obtenir la signature; et
la génération du message de requête d'accès transportant le texte chiffré, la signature et le nombre aléatoire.

3. Procédé selon la revendication 2, dans lequel, avant la génération d'un message de requête d'accès, le procédé comprend en outre:
la réalisation d'une opération de doublement de point sur la clé privée de terminal et la clé publique de station de base afin d'obtenir une clé de chiffrement partagée; et
la dérivation d'une clé maître sur la base de la clé de chiffrement partagée,
dans lequel la génération d'un message de requête d'accès comprend:
la génération du message de requête d'accès sur la base de la clé maître.

4. Procédé selon la revendication 3, dans lequel la génération du message de requête d'accès sur la base de la clé maître comprend:
la réalisation d'un chiffrement symétrique de l'identifiant d'identité sur la base d'un bit de poids fort de la clé maître afin d'obtenir le texte chiffré;
la réalisation d'un processus de signature sur l'identifiant d'identité, le nombre aléatoire et une clé publique de terminal du terminal utilisateur sur la base d'un bit de poids faible de la clé maître afin d'obtenir la signature; et
la génération du message de requête d'accès transportant le texte chiffré, la signature, le nombre aléatoire et la clé publique de terminal.

5. Procédé selon l'une quelconque des revendications 1 à 4, dans lequel, avant la génération d'un message de requête d'accès, le procédé comprend en outre:
la réception d'une clé publique de station de base diffusée par la station de base.

6. Procédé selon l'une quelconque des revendications 1 à 4, dans lequel, avant la génération d'un message de requête d'accès, le procédé comprend en outre:
la génération d'une requête d'acquisition de clé, dans laquelle la requête d'acquisition de clé transporte un identifiant permanent d'abonnement et l'identifiant d'identité du terminal utilisateur, et l'identifiant d'identité étant déterminé sur la base de l'identifiant permanent d'abonnement;
l'envoi de la requête d'acquisition de clé à un centre combiné de gestion de clés publiques; et
la réception d'une clé privée de terminal émise par le centre combiné de gestion de clés publiques.

7. Procédé, appliqué à une station de base, pour vérifier une requête d'accès, comprenant:
la réception d'un message de requête d'accès d'un terminal utilisateur, dans lequel le message de requête d'accès transporte un texte chiffré et une signature, le texte chiffré étant déterminé sur la base d'une clé publique de station de base de la station de base et d'un identifiant d'identité du terminal utilisateur, et la signature étant déterminée sur la base d'une clé privée de terminal et de l'identifiant d'identité du terminal utilisateur;
l'analyse du message de requête d'accès sur la base d'une clé privée de station de base et d'une clé publique de terminal du terminal utilisateur afin d'obtenir la signature et le texte chiffré; et
la détermination de la légalité du terminal utilisateur selon la signature et le texte chiffré obtenus par l'analyse afin de déterminer s'il convient d'autoriser le terminal utilisateur à accéder.

8. Procédé selon la revendication 7, dans lequel la détermination de la légalité du terminal utilisateur selon la signature et le texte chiffré obtenus par l'analyse afin de déterminer s'il convient d'autoriser le terminal utilisateur à accéder comprend:
l'analyse du texte chiffré sur la base de la clé privée de station de base afin d'obtenir une première information de vérification;
le déchiffrement de la signature sur la base de la clé publique de terminal afin d'obtenir une seconde information de vérification; et
la détermination de la légalité du terminal utilisateur selon la cohérence entre la première information de vérification et la seconde information de vérification afin de déterminer s'il convient d'autoriser le terminal utilisateur à accéder.

9. Procédé selon la revendication 8, dans lequel le message de requête d'accès transporte en outre un nombre aléatoire généré par le terminal utilisateur;
dans lequel l'analyse du texte chiffré sur la base de la clé privée de station de base afin d'obtenir une première information de vérification comprend:
l'analyse du texte chiffré sur la base de la clé privée de station de base afin d'obtenir un identifiant d'identité après analyse; et
la détermination de la première information de vérification, la première information de vérification étant une valeur de hachage d'un message combiné comprenant l'identifiant d'identité après analyse et le nombre aléatoire.

10. Procédé selon la revendication 9, dans lequel, avant la réception d'un message de requête d'accès d'un terminal utilisateur, le procédé comprend en outre:
la réception d'une matrice de clés publiques émise par un centre combiné de gestion de clés publiques;
dans lequel, avant le déchiffrement de la signature sur la base de la clé publique de terminal afin d'obtenir une seconde information de vérification, le procédé comprend en outre:
la génération d'une clé publique de terminal sur la base de l'identifiant d'identité après analyse et de la matrice de clés publiques.

11. Procédé selon la revendication 7, dans lequel le message de requête d'accès transporte en outre une clé publique de terminal du terminal utilisateur; et
la détermination de la légalité du terminal utilisateur selon la signature et le texte chiffré obtenus par l'analyse afin de déterminer s'il convient d'autoriser le terminal utilisateur à accéder comprend:
la réalisation d'une opération de doublement de point sur la clé privée de station de base et la clé publique de terminal afin d'obtenir une clé de chiffrement partagée;
la dérivation d'une clé maître sur la base de la clé de chiffrement partagée;
la génération d'une signature à vérifier sur la base de la clé maître et du texte chiffré; et
la détermination de la légalité du terminal utilisateur sur la base de la cohérence entre la signature à vérifier et la signature afin de déterminer s'il convient d'autoriser le terminal utilisateur à accéder.

12. Dispositif électronique, comprenant une mémoire, un processeur et un programme informatique stocké dans la mémoire et exécutable par le processeur, dans lequel le programme informatique, lorsqu'il est exécuté par le processeur, met en œuvre les étapes du procédé selon l'une quelconque des revendications 1 à 6 ou l'une quelconque des revendications 7 à 11.

13. Support de stockage lisible par ordinateur stockant un programme informatique, dans lequel le programme informatique, lorsqu'il est exécuté par un processeur, met en œuvre les étapes du procédé selon l'une quelconque des revendications 1 à 6 ou l'une quelconque des revendications 7 à 11.
